# EUROPÄISCHE PATENTSCHRIFT

(11) **EP 1 711 538 B1**
(45) Veröffentlichungstag und Bekanntmachung des Hinweises auf die Patenterteilung: **05.12.2007**
(21) Anmeldenummer: 05715920.4
(22) Anmeldetag: 10.03.2005
(51) Int. Cl.: C08F 2/44, C03C 17/30, C08K 9/06, C09C 3/12, C09C 1/28

(54) **OBERFLÄCHENMODIFIZIERTE PARTIKEL ENTHALTENDE HÄRTBARE ZUSAMMENSETZUNG**
CURABLE COMPOSITION CONTAINING SURFACE-MODIFIED PARTICLES
COMPOSITION DURCISSABLE CONTENANT DES PARTICULES MODIFIEES EN SURFACE

(30) Priorität: 25.03.2004 DE 102004014684
(43) Veröffentlichungstag der Anmeldung: 18.10.2006
(73) Patentinhaber: Wacker Chemie AG, 81737 München (DE)
(72) Erfinder: BRIEHN, Christoph, 81369 München (DE); STANJEK, Volker, 81477 München (DE); JUNG-ROSSETTI, Silvia, 80636 München (DE); KNEZEVIC, Christine, 81369 München (DE)
(74) Vertreter: Fritz, Helmut
(86) Internationale Anmeldenummer: PCT/EP2005/002542
(87) Internationale Veröffentlichungsnummer: WO 2005/092933

(56) Entgegenhaltungen:
- WO-A-20/04089961
- ALTMANNS ET AL: "The hydrolysis/condensation behaviour of methacryloyloxyalkylfunctio nal alkoxysilanes: structure-reactivity relations" MONATSHEFTE FUER CHEMIE, SPRINGER VERLAG, VIENNA, AT, Bd. 134, 12. Juni 2003 (2003-06-12), Seiten 1081-1092, XP002328645 ISSN: 0026-9247 in der Anmeldung erwähnt

## Beschreibung

Die Erfindung betrifft härtbare Zusammensetzungen, die ein Bindemittel, das mindestens eine ethylenisch ungesättigte Gruppe trägt, sowie Partikel enthalten, die über mindestens eine ethylenisch ungesättigte Gruppe an ihrer Oberfläche verfügen, sowie die Verwendung dieser Zusammensetzungen zur Beschichtung.

Radikalisch härtbare Beschichtungszusammensetzungen, die nanoskalige, mit organischen Resten oberflächenmodifizierte Füllstoffe enthalten und nach Härtung Beschichtungen mit hoher mechanischer Härte und Chemikalienbeständigkeit liefern, sind bekannt. Bei derartigen Beschichtungszusammensetzungen gewährleistet eine geeignete Modifikation der Partikeloberfläche die Kompatibilität des Partikels mit der umgebenden Polymermatrix. Besitzt die Partikeloberfläche zudem eine geeignete Reaktivität gegenüber der Matrix, so dass sie unter den jeweiligen Härtungsbedingungen des Beschichtungssystems mit dem Bindemittelsystem reagieren kann, gelingt es, die Partikel während der Härtung chemisch in die Matrix einzubauen, was sich häufig positiv auf das Eigenschaftsprofil des Kompositsystems auswirkt.

Radikalisch härtbare partikelverstärkte Beschichtungszusammensetzungen sind u.a. in US 4455205 A und US 4491508 A beschrieben und werden beispielsweise durch Umsetzung von kolloidalem Siliciumdioxid mit 3-Methacryloxypropyltrimethoxsilan und dem anschließenden Austausch des wässrigen und/oder alkoholischen Lösungsmittel gegen ein radikalisch vernetzbares organisches Bindemittel erhalten. Derartige Beschichtungszusammensetzungen können zur Beschichtung von thermoplastischen Substraten eingesetzt werden.

Aus US 6306502 B sind Beschichtungszusammensetzungen für Kratzfestbeschichtungen bekannt, die aus kolloidalem Siliciumdioxid und einem radikalisch polymerisierbaren Silan hergestellt werden können. Als Bindemittel wird hierbei ein (meth)acryloxyalkyl-funktionelles Isocyanurat eingesetzt.

In DE 102 00 928 A1 sind härtbare organische Dispersionen enthaltend oberflächenmodifizierte Nanopartikel beschrieben, die beispielsweise hergestellt werden, indem hydrophiles pyrogenes Siliciumdioxid nach einem Dispergierschritt in Dipentaerythritpentaacrylat mit 3-Methacryloxypropyltrimethoxysilan, Aluminiumbutylat und Wasser vermischt wird. Derartige Dispersionen lassen sich insbesondere als Beschichtungsstoffe aber auch als Klebstoffe und Dichtungsmassen einsetzen.

Nach dem Stand der Technik werden die in den Beschichtungssystemen enthaltenen Partikel hergestellt, indem man Partikel, die über freie Siliciumhydroxid- (SiOH) oder Metallhydroxidfunktionen (MeOH) verfügen, mit Alkoxysilanen umsetzt, die als reaktive organische Funktion eine ethylenisch ungesättigte Gruppe, wie z.B. Vinyl, (Meth)acryl etc., enthalten. Sämtlichen im Stand der Technik zur Partikelfunktionalisierung eingesetzten Silanen ist dabei gemeinsam, dass sie über eine Di- oder Trialkoxysilylgruppe verfügen, wie dies z.B. beim Methacrylatopropyl-trimethoxysilan der Fall ist.

Aus EP 1611141 B1 sind feuchtigkeitsvernetzbare organosilylfunktionalisierte Partikel bekannt, die hergestellt werden aus OH-funktionalisierten Partikeln und Alkoxysilanen, welche weitere feuchtigkeitsvernetzbare Funktionen enthalten. Diese Partikel können sowohl als Bindemittel als auch als Füllstoff zur Herstellung von Beschichtungen eingesetzt werden.

Werden zur Oberflächenfunktionalisierung Di- oder Trialkoxysilane eingesetzt, wird in Gegenwart von Wasser nach Hydrolyse und Kondensation der erhaltenen Silanole eine Siloxan-Hülle um den Partikel gebildet. In Macromol. Chem. Phys. 2003, 204, 375-383 wird die Ausbildung einer solchen Siloxan-Hülle um einen SiO₂-Partikel beschrieben. Problematisch kann hierbei sein, dass die gebildete Siloxan-Hülle noch über eine große Anzahl von SiOH-Funktionen auf der Oberfläche verfügt. Die Stabilität derartiger SiOH-funktioneller Partikel ist unter den Bedingungen der Herstellung und Lagerung, auch in Gegenwart des Bindemittels, gegebenenfalls eingeschränkt. Es kann zur Aggregation bzw. Agglomeration der Partikel kommen. Die damit verbundene eingeschränkte Stabilität der Dispersionen erschwert die Herstellung von Materialien mit reproduzierbaren Eigenschaften. Zudem ist ein großer Anteil der reaktiven organischen Funktionen in der Siloxan-Hülle sterisch so abgeschirmt, dass über diese Funktionen keine Anknüpfung der Partikel an das reaktive Bindemittel möglich ist. Idealerweise sollten aber sämtliche an der Partikeloberfläche angebundenen reaktiven organischen Funktionen für einen kovalenten Einbau an die Matrix zur Verfügung stehen.

Somit besitzen sämtliche bekannten partikelhaltigen Bindemittelsysteme den Nachteil, sowohl in gehärteter und ungehärteter Form oftmals nur schwer reproduzierbare Eigenschaften aufzuweisen. Vor allem aber sind die mechanische Härten - und insbesondere die Kratzfestigkeit - der ausgehärteten Beschichtungen für viele Anwendungen noch nicht ausreichend.

Der vorliegenden Erfindung liegt somit die Aufgabe zu Grunde, ein mit aktinischer Strahlung oder thermisch härtbares Beschichtungssystem zur Verfügung zu stellen, das diese . Nachteile der bekannten Systeme nicht mehr aufweist.

Gegenstand der Erfindung sind härtbare Zusammensetzungen Z, die ein Bindemittel BM, das mindestens eine ethylenisch ungesättigte Gruppe trägt, sowie Partikel P enthalten, die über mindestens eine ethylenisch ungesättigte Gruppe an ihrer Oberfläche verfügen und Reste der allgemeinen Formel I,

-SiR²₂-(CR³₂)ₙ-A-D-C (I),

aufweisen, wobei die Partikel P herstellbar sind durch Umsetzung von
(a) Partikeln **P1** aus einem Material, das ausgewählt wird aus Metalloxiden, Metall-Silicium-Mischoxiden, Siliciumdioxid, kolloidalem Siliciumdioxid und Organopolysiloxanharzen und deren Kombinationen, das über Funktionen verfügt, die ausgewählt werden aus Me-OH, Si-OH, Me-O-Me, Me-O-Si, Si-O-Si, Me-OR¹ und Si-OR¹, wobei die Partikel P1 einen mittleren Durchmesser von kleiner 1000 nm besitzen, wobei die Teilchengröße durch Transmissionselektronenmikroskopie bestimmt wird
(b) mit Organosilanen B der allgemeinen Formel II,

   (R¹O) R²₂Si- (CR³₂)ₙ-A-D-C (II),

   bzw. deren Hydrolyse und/oder Kondensationsprodukten,
(c) und gegebenenfalls mit Wasser, wobei
   - R¹: Wasserstoff oder Kohlenwasserstoffrest mit 1 bis 6 Kohlenstoffatomen, dessen Kohlenstoffkette durch nicht benachbarte Sauerstoff-, Schwefel-, oder NR⁴-Gruppen unterbrochen sein kann,
   - R²: -(CR³₂)ₙ-A-D-C oder ein Kohlenwasserstoffrest mit 1 bis 12 Kohlenstoffatomen, dessen Kohlenstoffkette durch nicht benachbarte Sauerstoff-, Schwefel-, oder NR⁴-Gruppen unterbrochen sein kann,
   - R³: Wasserstoff oder Kohlenwasserstoffrest mit 1 bis 12 Kohlenstoffatomen, dessen Kohlenstoffkette durch nicht benachbarte Sauerstoff-, Schwefel-, oder NR⁴-Gruppen unterbrochen sein kann,
   - R⁴: Wasserstoff oder Kohlenwasserstoffrest mit 1 bis 12 Kohlenstoffatomen,
   - -A-D-C: die Gruppe OC(O)C(CH₃)=CR³₂, OC(O)CH=CR³₂, NHC(O)C(CH₃)=CR³₂ oder NHC(O)CH=CR³₂,
   - n: Werte größer oder gleich 1 und
   - Me: ein Metallatom bedeuten.

Die härtbaren Zusammensetzungen Z enthalten Partikel P, die mittels der reaktiven ethylenisch ungesättigte Gruppe enthaltenden Reste der allgemeinen Formel I oberflächenmodifiziert sind, wobei sich die reaktiven Reste dadurch auszeichnen, dass die Silylgruppe drei über eine C-C-Bindung gebundene organische Reste trägt und über eine weitere Bindung an die Partikeloberfläche geknüpft ist. Die Kratzfestigkeit der härtbaren Zusammensetzungen Z ist dadurch gegenüber den bekannten Partikel enthaltenden Zusammensetzungen deutlich gesteigert.

Der Einsatz von monofunktionellen Organosilanen B der allgemeinen Formel II gestattet die Partikelfunktionalisierung auch in Abwesenheit von Wasser. Dabei lassen sich in einer stöchiometrischen Reaktion nahezu sämtliche MeOH- und/oder SiOH-Gruppen auf der Oberfläche des Partikels mit Organosilanen B absättigen. Verbleibende MeOH- und/oder SiOH-Gruppen, die die Stabilität der Partikel einschränken können, sind somit weitgehend vermeidbar. Auch frei zugängliche Me-O-Me, Me-O-Si oder Si-O-Si-Gruppen lassen sich in einer stöchiometrischen Reaktion durch Umsetzung mit Organosilanen B funktionalisieren.

Der Kohlenwasserstoffrest R¹ ist vorzugsweise ein Alkyl-, Cycloalkyl- oder Arylrest, insbesondere Methyl-, Ethyl- oder Phenylrest, besonders bevorzugt ein Methyl- oder Ethylrest. R² ist bevorzugt ein Alkyl-, Cycloalkyl-, Aryl- oder Arylalkylrest, insbesondere Methyl-, Ethyl- oder Phenylrest, besonders bevorzugt ein Methylrest. R³ ist bevorzugt Wasserstoff oder Alkyl-, Cycloalkyl-, Aryl- oder Arylalkylrest, insbesondere Methyl-Rest, besonders bevorzugt handelt es sich bei bei den Resten R³ um wasserstoff. n nimmt bevorzugt die Werte 1, 2 oder 3 an. Besonders bevorzugt ist n = 1. Die Gruppe C ist vorzugsweise ein ungesättigter Alkylrest mit 2 bis 12 Kohlenstoffatomen, besonders bevorzugt mit 2 bis 6 Kohlenstoffatomen, insbesondere Vinyl, Acryl, Methacryl. Die Gruppen (-A-D-C) stehen bevorzugt für folgende Reste: OC(O) C (CH₃) =CR³₂, OC (O) CH=CR³₂, NHC (O) C (CH₃) =CR³₂ oder NHC(O)CH=CR³₂. Besonders bevorzugt stehen sie für die Reste OC(O) C (CH₃) =CR³₂ oder OC(O) CH=CR³₂.

Die Zusammensetzungen Z werden bevorzugt als Beschichtungen eingesetzt. Besonders bevorzugt dienen sie dabei der Verbesserung der Kratzfestigkeit der beschichteten Oberfläche. Die aus Zusammensetzungen Z durch Härtung erhältlichen Beschichtungen weisen eine höhere mechanische Härte und verbesserte Kratzfestigkeit auf als vergleichbare Beschichtungen, welche Partikel enthalten, die mit herkömmlichen trifunktionellen Alkoxysilanen, wie z.B. Methacrylatopropyltrimethoxysilan, bzw. deren Hydrolyse-und/oder Kondensationsprodukten oberflächenmodifiziert sind.

Aufgrund der hohen Reaktivität der Alkoxysilane B mit Methylenspacer zwischen Alkoxysilylgruppe und einem Heteroatom (n = 1) eignen sich diese Verbindungen besonders zur Funktionalisierung von SiOH- bzw. MeOH-tragenden Partikeln P1. Auch die Equilibrierung der Me-O-Me-, Me-O-Si-, Si-O-Sifunktionellen Partikel mit den Alkoxysilanen B kann zur Herstellung der Partikel P durchgeführt werden. Die Umsetzungen der Partikel P1 mit den Alkoxysilanen B verlaufen schnell und vollständig.

Das in den Zusammensetzungen Z enthaltene Bindemittel BM muß eine oder mehrere reaktionsfähige Gruppen tragen, die bevorzugt initiiert durch aktinische Strahlung oder thermische Behandlung unter Aufbau eines Polymers mit sich und den reaktionsfähigen Partikeln zu einer radikalischen, kationischen oder anionischen Polymerisation befähigt sind. Reaktionsfähige Gruppen sind Gruppen mit ethylenisch ungesättigten Funktionen, insbesondere Vinylgruppen, Methacrylatgruppen, Acrylatgruppen, Acrylamidgruppen. Das Bindemittel BM kann dabei sowohl monomere, oligomere oder auch polymere Verbindungen enthalten. Beispiele geeigneter monomerer und oligomerer Verbindungen sind Hexandioldiacrylat, Pentaerythrittriacrylat, Dipentaerythritpentaacrylat, Triethylenglycoldiacrylat etc. Beispiele geeigneter polymerer Bindemittel BM sind ethylenisch ungesättigte Gruppen tragende (Meth)acrylcopolymere, Polyester-(meth-)acrylate, ungesättigte Polyester, Urethan-(meth-)-acrylate, Silicon-(meth-)acrylate.

Unter aktinischer Strahlung wird elektromagnetische Strahlung im Infrarot (NIR), im Sichtbaren, im Ultraviolett (UV) sowie im Bereich der Röntgenstrahlung verstanden.

Die Zusammensetzungen Z zeichnen sich dadurch aus, daß als Partikel P1 sämtliche Metalloxid- und Metallmischoxid-Partikel (z.B. Aluminiumoxide wie Korund, Aluminiummischoxide mit anderen Metallen und/oder Silicium, Titanoxide, Zirkonoxide, Eisenoxide etc.), Siliciumoxid-Partikel (z.B. kolloidale Kieselsäure, pyrogene Kieselsäure, gefällte Kieselsäure, Kieselsole) oder Siliciumoxid-Verbindungen, bei denen einige Valenzen des Siliciums mit.organischen Resten versehen sind (z.B. Siliconharze), eingesetzt werden. Die Partikel P1 zeichnen sich weiter dadurch aus, daß sie auf ihrer Oberfläche über Metall- (MeOH), Siliciumhydroxid- (SiOH), Me-O-Me-, Me-O-Si- und/oder Si-O-Si-Funktionen verfügen, über die eine Reaktion mit den Organosilanen B erfolgen kann. Die Partikel P1 besitzen bevorzugt einen mittleren Durchmesser von kleiner 100 nm, wobei die Teilchengröße durch Transmissionselektronenmikroskopie bestimmt wird.

In einer bevorzugten Ausführung der Erfindung bestehen die Partikel P1 aus pyrogener Kieselsäure. In einer weiteren bevorzugten Ausführung der Erfindung werden als Partikel P1 kolloidale Silicium- oder Metalloxide eingesetzt, die bevorzugt als Dispersion der entsprechenden Oxidteilchen von Submikrongröße in einem wäßrigen oder organischen Lösungsmittel vorliegen. Dabei können bevorzugt die Oxide der Metalle Aluminium, Titan, Zirkonium, Tantal, Wolfram, Hafnium, Zinn verwendet werden. Bevorzugt werden wässrige SiO₂-Sole eingesetzt, die bevorzugt mit Organosilanen B der allgemeinen Formel II umgesetzt werden.

Ebenfalls bevorzugt eingesetzt werden zudem Partikel P1, die aus Siliconharzen der allgemeinen Formel IV

(R⁷₃SiO_{1/2})ₑ(R⁷₂SiO_{2/2})ₜ (R⁷SiO_{3/2})_{g} (SiO_{4/2})ₕ (IV)

bestehen, wobei
- R⁷: eine OR⁸-Funktion, eine OH-Funktion, einen gegebenenfalls halogen-, hydroxyl-, amino-, epoxy-, thiol-, (meth)acryl-, oder NCO-substituierten Kohlenwasserstoffrest mit 1-18 Kohlenstoffatomen, wobei die Kohlenstoffkette durch nicht benachbarte Sauerstoff-, Schwefel-, oder NR⁴-Gruppen unterbrochen sein kann,
- R⁸: einen gegebenenfalls substituierten einwertigen Kohlenwasserstoffrest mit 1-18 Kohlenstoffatomen,
- e: einen Wert von größer oder gleich 0,
- f: einen Wert von größer oder gleich 0,
- g: einen Wert von größer oder gleich 0 und
- h: einen Wert von größer oder gleich 0 bedeuten, mit der Massgabe, dass die Summe aus e + f + g + h mindestens 1, vorzugsweise mindestens 5 ist.

Für die Zusammensetzungen Z können ein oder mehrere verschiedene Partikeltypen P eingesetzt werden. So lassen sich beispielsweise Beschichtungssysteme herstellen, die neben nanoskaligem SiO₂ auch nanoskaligen Korund enthalten.

Die Menge der im Beschichtungssystem Z enthaltenen Partikel P beträgt, bezogen auf das Gesamtgewicht, vorzugsweise mindestens 5 Gew.-%, bevorzugt mindestens 10 Gew.-%, besonders bevorzugt mindestens 15 Gew.-% und vorzugsweise höchstens 90 Gew.-%.

Die Herstellung der Zusammensetzungen Z erfolgt vorzugsweise in einem zweistufigen Verfahren. In der ersten Stufe werden die Partikel P hergestellt. Im zweiten Schritt werden die funktionalisierten Partikel P in das Bindemittel BM eingebracht.

In einem bevorzugten Verfahren wird der durch Umsetzung des Partikels P1 mit dem Organosilan B erhaltene Partikel P gereinigt, bevor er in das Bindemittel BM eingebracht wird.

Dieses Vorgehen empfiehlt sich insbesondere dann, wenn sich die im Herstellungsprozess anfallenden Verunreinigungen negativ auf das Eigenschaftsprofil der (ausgehärteten) Beschichtung auswirken. Die Reinigung der Partikel P kann beispielsweise erfolgen, indem der Partikel ausgefällt und anschließend mit einem geeigneten Lösungsmittel gewaschen wird.

In einem alternativen Verfahren wird die Zusammensetzung Z hergestellt, indem die Partikel P1 in Gegenwart des Bindemittels BM mit den Silanen B funktionalisert werden. In beiden Herstellungsverfahren können die Partikel P1 sowohl als Dispersion in einem wässrigen oder auch wasserfreien Lösungsmittel als auch im festen Zustand vorliegen.

Werden dabei wässrige oder nichtwässrige Dispersionen der Partikel P1 verwendet, so wird das entsprechende Lösungsmittel nach dem Einbringen der Partikel P oder P1 in das Bindemittel BM in der Regel entfernt. Die Entfernung des Lösungsmittels erfolgt dabei bevorzugt destillativ, sie kann vor oder nach dem Umsatz der Partikel P1 mit den Silanen B erfolgen.

Beispiele für bevorzugt eingesetzte Silane B sind Methacrylatomethyl-dimethylmethoxysilan, Methacrylatomethyldimethylethoxysilan, Methacrylatopropyl-dimethylmethoxysilan, Methacrylatopropyl-dimethylethoxysilan, Acrylatomethyldimethylmethoxysilan, Acrylatomethyl-dimethylethoxysilan, Acrylatopropyl-dimethylmethoxysilan und Acrylatopropyldimethylethoxysilan.

Zur Funktionalisierung der Partikel kann ein Silan B einzeln oder ein Gemisch verschiedener Silane B oder auch ein Gemisch aus Silanen B mit anderen Alkoxysilanen eingesetzt werden.

Die Zusammensetzungen Z können zudem gängige Lösungsmittel sowie die in Formulierungen üblichen Additive und Zusätze enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Fest- und Füllstoffe. Zur Erzeugung der jeweils gewünschten Eigenschaftsprofile sowohl der Zusammensetzungen als auch der ausgehärteten Massen sind derartige Zusätze bevorzugt. Dies gilt insbesondere dann, wenn die Zusammensetzungen Z als Beschichtungen eingesetzt werden sollen. Ebenso können diese Beschichtungsformulierungen auch Farbstoffe und/oder Pigmente enthalten.

Die Aushärtung der Zusammensetzung Z erfolgt bevorzugt durch aktinische Strahlung oder thermisch initiierte radikalische Polymerisation unter den für ethylenisch ungesättigte Gruppen erforderlichen Bedingungen in üblicher, dem Fachmann bekannter Weise.
Die Polymerisation erfolgt beispielsweise durch UV-Bestrahlung nach Zusatz geeigneter Photoinitiatoren wie z.B. Darocur^{®} 1178, Darocur^{®} 1174, Irgacure^{®} 184, Irgacure^{®} 500. Diese Photoinitiatoren werden üblicherweise in Mengen von 0,1-5 Gew.-% eingesetzt. Thermisch lässt sich die Polymerisation nach Zugabe von organischen Peroxiden, wie z.B. Peroxydicarbonsäuren, oder Azoverbindungen, wie z.B. Azobisisobutyronitril, durchführen.

In einer besonders bevorzugten Ausführung der Erfindung enthalten die Zusammensetzungen Z mindestens einen Photoinitiator und die Härtung der Beschichtung erfolgt durch UV-Strahlung. In einer weiteren besonders bevorzugten Ausführung der Erfindung erfolgt die Aushärtung der Zusammensetzungen Z durch Elektronenstrahlen.

Die nach Aushärtung der Zusammensetzungen Z erhaltenen Beschichtungen besitzen hervorragende mechanische Eigenschaften. Im Vergleich zu bekannten Materialien wird beispielsweise die Kratzfestigkeit signifikant verbessert.

Ein weiterer Gegenstand der Erfindung ist die Verwendung der Zusammensetzungen Z zur Beschichtung von beliebigen Substraten.
Bevorzugte Substrate sind beispielsweise oxidische Materialien, wie z.B. Glas, Metalle, Holz oder Kunststoffe wie Polycarbonat, Polybutylentherephthalat, Polymethylmethacrylat, Polystyrol, Polyvinylchlorid, Polypropylen.

Die aufgebrachten Beschichtungen dienen zur Verbesserung der Kratzfestigkeit, Abriebbeständigkeit, Chemikalienbeständigkeit oder aber zur Beeinflussung der abhäsiven Eigenschaften.
Das Aufbringen der Zusammensetzungen Z kann durch beliebige Verfahren wie Eintauch-, Sprüh- und Gießverfahren erfolgen. Auch ein Aufbringen nach einem "wet in wet"-Verfahren ist möglich.

Alle Symbole der vorstehenden Formeln weisen ihre Bedeutungen jeweils unabhängig voneinander auf. In allen Formeln ist das Siliciumatom vierwertig.

Soweit nicht anders angegeben sind in den folgenden Beispielen alle Mengen- und Prozentangaben auf das Gewicht bezogen, alle Drücke 0,10 MPa (abs.) und alle Temperaturen 20°C.

### Beispiel 1:

Zu 20,00 g eines SiO₂-Organosols (IPA-ST® der Firma Nissan Chemicals, 30 Gew.-% SiO₂, 12 nm) werden innerhalb von 1 min 2,00 g Methacrylatomethyl-dimethylmethoxysilan getropft und das Gemisch für 16 h auf 60 °C erwärmt. Nach Abkühlen des Gemischs auf Raumtemperatur werden 15,00 g Hexandioldiacrylat zugegeben und anschliessend das Isopropanol unter vermindertem Druck abdestilliert. Die transparente Dispersion enthält 29 Gew.-% SiO₂.

### Beispiel 2:

Zu 20,00 g eines wässrigen SiO₂-Sols (LUDOX^{®} AS 40 der Firma Grace Davison, 40 Gew.-% SiO₂, pH = 9,1, 22 nm) werden innerhalb von 60 min 15 ml Ethanol und binnen 5 min 2,00 g Methacrylatomethyl-dimethylmethoxysilan getropft und das Gemisch für 16 h auf 60 °C erwärmt. Nach Abkühlen des Gemischs auf Raumtemperatur werden 15 g Hexandioldiacrylat zugegeben und anschliessend Ethanol und Wasser als Azeotrop abdestilliert. Die transparente Dispersion enthält 29 Gew.-% SiO₂.

### Beispiel 3:

Zu 20,00 g eines SiO₂-Organosols (IPA-ST® der Firma Nissan Chemicals, 30 Gew.-% SiO₂, 12 nm) werden innerhalb von 1 min 2,00 g Methacrylatomethyl-dimethylmethoxysilan getropft und das Gemisch für 16 h auf 60 °C erwärmt. Nach Abdestillieren des Lösungsmittels wird der Rückstand mit 100 ml (5 x 20 ml) Pentan gewaschen. Zu einer Dispersion von 2,90 g des erhaltenen Feststoffs in 10.ml Ethanol werden 7,10 g HDDA zugegeben und das Lösungsmittel abdestilliert. Man erhält eine transparente Dispersion mit einem SiO₂-Gehalt von 29 Gew.-%.

### Vergleichsbeispiel 1:

Zu 26,7 g eines SiO₂-Organosols (IPA-ST® der Firma Nissan Chemicals, 30 Gew.-% SiO₂, 12 nm) werden innerhalb von 1 min 15,00 g Hexandioldiacrylat zugegeben, 30 min gerührt und anschliessend das Isopropanol unter vermindertem Druck abdestilliert. Die transparente Dispersion enthält 35 Gew.-% SiO₂.

### Vergleichsbeispiel 2:

Zu 20,00 g eines wässrigen SiO₂-Sols (LUDOX^{®} AS 40 der Firma Grace Davison, 40 Gew.-% SiO₂ pH = 9,1, 22 nm) werden innerhalb von 60 min 20 ml Ethanol und binnen 5 min 2,00 g Methacrylatomethyl-trimethoxysilan getropft und das Gemisch für 16 h auf 60 °C erwärmt. Nach Abkühlen des Gemischs auf Raumtemperatur werden 15 g Hexandioldiacrylat zugegeben und anschliessend Ethanol und Wasser als Azeotrop abdestilliert. Die transparente Dispersion enthält 35 Gew.-% SiO₂.

### Vergleichsbeispiel 3:

Zu einem Gemisch von 20,00 g eines SiO₂-Organosols (IPA-ST® der Firma Nissan Chemicals, 30 Gew.-% SiO₂, 12 nm) und 10 g Wasser werden innerhalb von 1 min 2,00 g Methacrylatopropyl-trimethoxysilan getropft. Das Gemisch wird für 16 h auf 60 °C erwärmt. Nach Abkühlen auf Raumtemperatur werden 15 g Hexandioldiacrylat zugegeben und anschliessend Isopropanol und Wasser azeotrop abdestilliert. Die transparente Dispersion enthält 29 Gew.-% SiO₂.

### Beispiel 4:

### Herstellung von Lackfilmen

Die Beschichtungsmassen aus den Beispielen 1, 2, 3 und den Vergleichsbeispielen 1, 2 und 3 sowie eine Beschichtung, die aus reinem 1,6-Hexandioldiacrylat besteht, werden jeweils mittels eines Filmziehgerätes Coatmaster^{®} 509 MC der Fa. Erichsen mit einem Rakel der Spalthöhe 80 *µ*m auf einer Glasplatte aufgerakelt. Anschließend werden die erhaltenen Beschichtungsfilme unter Stickstoff in einem UVA-Cube, Typ UVA-Print 100 CV1 der Fa. Dr. Hönle mit einer Lampenleistung von ca. 60 mW/cm² bei einer Bestrahlungsdauer von 60 s gehärtet. Aus sämtlichen Beschichtungsforumulierungen werden dabei optisch schöne und glatte Beschichtungen erhalten. Der Glanz äller fünf Beschichtungen - bestimmt mit einem Glanzmessgerät Micro gloss 20° der Fa. Byk - lag bei allen 6 Lacken bei ca. 155 Glanz-Einheiten.

### Beispiel 5:

### Bewertung der Kratzfestigkeit von Lackfilmen

Die Kratzfestigkeit der nach Beispiel 4 erzeugten Lackfilme wird mit einem Scheuerprüfgerät nach Peter-Dahn ermittelt. Hierzu wird ein Scheuervlies Scotch Brite^{®} 07558 mit einer Fläche von 45 x 45 mm mit einem Gewicht von 1 kg beschwert und mit 500 Hüben verkratzt. Sowohl vor Beginn als auch nach Beendigung der Kratzversuche wird der Glanz der jeweiligen Beschichtung mit einem Glanzmessgerät Micro gloss 20° der Fa. Byk gemessen. Als Maß für die Kratzfestigkeit der jeweiligen Beschichtung wird der Glanzverlust bestimmt (Mittelwert aus jeweils 3 Lackproben):

**Tabelle 1: Glanzverlust beim Kratztest nach Peter-Dahn**

| Lackprobe | Glanzverlust |
|---|---|
| Beispiel 1 | 15 ± 4 % |
| Beispiel 2 | 10 ± 5 % |
| Beispiel 3 | < 5 % |
| Vergleichsbeispiel 1 | 78 ± 7 % |
| Vergleichsbeispiel 2 | 25 ± 5 % |
| Vergleichsbeispiel 3 | 43 ± 5 % |
| 1,6-Hexandioldiacrylat | 75 ± 10 % |

## Patentansprüche

1. Härtbare Zusammensetzungen Z, die ein Bindemittel BM, das mindestens eine ethylenisch ungesättigte Gruppe trägt, sowie Partikel P enthalten, die über mindestens eine ethylenisch ungesättigte Gruppe an ihrer Oberfläche verfügen und Reste der allgemeinen Formel I,
-SiR²₂- (CR³₂)ₙ-A-D-C (I),
aufweisen, wobei die Partikel P herstellbar sind durch Umsetzung von
(a) Partikeln **P1** aus einem Material, das ausgewählt wird aus Metalloxiden, Metall-Silicium-Mischoxiden, Siliciumdioxid, kolloidalem Siliciumdioxid und Organopolysiloxanharzen und deren Kombinationen, das über Funktionen verfügt, die ausgewählt werden aus Me-OH, Si-OH, Me-O-Me, Me-O-Si, Si-O-Si, Me-OR¹ und Si-OR¹, wobei die Partikel **P1** einen mittleren Durchmesser von kleiner 1000 nm besitzen, wobei die Teilchengröße durch Transmissionselektronenmikroskopie bestimmt wird
(b) mit Organosilanen B der allgemeinen Formel II,
(R¹O)R²₂Si- (CR³₂)ₙ-A-D-C (II),
bzw. deren Hydrolyse und/oder Kondensationsprodukten,
(c) und gegebenenfalls mit Wasser, wobei
R¹ Wasserstoff oder Kohlenwasserstoffrest mit 1 bis 6 Kohlenstoffatomen, dessen Kohlenstoffkette durch nicht benachbarte Sauerstoff-, Schwefel-, oder NR⁴-Gruppen unterbrochen sein kann,
R² -(CR³₂)ₙ-A-D-C oder ein Kohlenwasserstoffrest mit 1 bis 12 Kohlenstoffatomen, dessen Kohlenstoffkette durch nicht benachbarte Sauerstoff-, Schwefel-, oder NR⁴-Gruppen unterbrochen sein kann,
R³ Wasserstoff oder Kohlenwasserstoffrest mit 1 bis 12 Kohlenstoffatomen, dessen Kohlenstoffkette durch nicht benachbarte Sauerstoff-, Schwefel-, oder NR⁴-Gruppen unterbrochen sein kann,
R⁴ Wasserstoff oder Kohlenwasserstoffrest mit 1 bis 12 Kohlenstoffatomen,
-A-D-C die Gruppe OC(O)C(CH₃)=CR ³₂, OC(O)CH=CR³₂, NHC(O)C(CH₃) =CR³₂ oder NHC(O) CH=CR³₂,
n Werte größer oder gleich 1 und
Me ein Metallatom bedeuten.

2. Zusammensetzungen Z nach Anspruch 1, bei denen die Partikel P1 ausgewählt werden aus pyrogener Kieselsäure, kolloidaler Kieselsäure und Siliconharzen.

3. Zusammensetzungen Z nach Anspruch 1 und 2, bei denen der Kohlenwasserstoffrest R¹ ein Methyl-, Ethyl- oder Phenylrest ist.

4. Zusammensetzungen Z nach Anspruch 1 bis 3, bei denen die ethylenisch ungesättigten Gruppen im Bindemittel BM befähigt sind zur radikalischen, kationischen oder anionischen Polymerisation.

5. Zusammensetzungen Z nach Anspruch 1 bis 3, bei denen die ethylenisch ungesättigten Gruppen im Bindemittel BM polymerisiert werden können durch aktinische Strahlung oder thermische Behandlung.

6. Zusammensetzungen Z nach Anspruch 1 bis 5, bei denen die ethylenisch ungesättigten Gruppen im Bindemittel BM ausgewählt werden aus Vinylgruppen, Methacrylatgruppen, Acrylatgruppen und Acrylamidgruppen.

7. Verwendung der Zusammensetzungen Z gemäss Anspruch 1 bis 6 zur Beschichtung von Substraten.

## Claims

1. Curable compositions Z comprising a binder BM that carries at least one ethylenically unsaturated group and also particles P which possess at least one ethylenically unsaturated group on their surface and contain radicals of the general formula I,
-SiR²₂-(CR³₂)ₙ-A-D-C (I),
where the particles P are preparable by reacting
(a) particles **P1** of a material selected from metal oxides, metal-silicon mixed oxides, silicon dioxide, colloidal silicon dioxide and organopolysiloxane resins and combinations thereof, and possessing functions selected from Me-OH, Si-OH, Me-O-Me, Me-O-Si, Si-O-Si, Me-OR¹ and Si-OR¹, the particles **P1** possessing an average diameter of less than 1000 nm, the particle size being determined by transmission electron microscopy,
(b) with organosilanes B of the general formula II,
(R¹O) R²₂Si-(CR³₂)ₙ-A-D-C (II),
and/or their hydrolysis and/or condensation products,
(c) and optionally with water, where
R¹ is hydrogen or hydrocarbon radical having 1 to 6 carbon atoms, whose carbon chain can be interrupted by nonadjacent oxygen, sulfur or NR⁴ groups,
R² is -(CR³₂)ₙ-A-D-C or a hydrocarbon radical having 1 to 12 carbon atoms, whose carbon chain can be interrupted by nonadjacent oxygen, sulfur or NR⁴ groups,
R³ is hydrogen or hydrocarbon radical having 1 to 12 carbon atoms, whose carbon chain can be interrupted by nonadjacent oxygen, sulfur or NR⁴ groups,
R⁴ is hydrogen or hydrocarbon radical having 1 to 12 carbon atoms,
-A-C-D is the group OC(O)C(CH₃)=CR³₂, OC(O)CH=CR³₂, NHC(O)C(CH₃)=CR³₂ or NHC(O)CH=CR³₂,
n is greater than or equal to 1 and
Me is a metal atom.

2. Compositions **Z** according to Claim 1, wherein the particles **P1** are selected from pyrogenic silica, colloidal silica, and silicone resins.

3. Compositions Z according to Claim 1 and 2, wherein the hydrocarbon radical R¹ is a methyl, ethyl or phenyl radical.

4. Compositions Z according to Claim 1 to 3, wherein the ethylenically unsaturated groups in the binder BM are capable of free-radical, cationic or anionic polymerization.

5. Compositions Z according to Claim 1 to 3, wherein the ethylenically unsaturated groups in the binder BM can be polymerized by actinic radiation or thermal treatment.

6. Compositions Z according to Claim 1 to 5, wherein the ethylenically unsaturated groups in the binder BM are selected from vinyl groups, methacrylate groups, acrylate groups and acrylamide groups.

7. The use of the compositions Z according to Claim 1 to 6 for coating substrates.

## Revendications

1. Compositions durcissables Z, contenant un liant BM portant au moins un groupe éthyléniquement insaturé, et contenant des particules P possédant à leur surface au moins un groupe éthyléniquement insaturé et des radicaux de la formule générale I,
-SiR²₂-(CR³₂)ₙ-A-D-C (I)
les particules P pouvant être préparées par réaction de
(a) particules P1 constituées d'un matériau choisi parmi des oxydes métalliques, des oxydes mixtes de métal - silicium, du dioxyde de silicium, du dioxyde de silicium colloïdal et des résines d'organopolysiloxanes et leurs combinaisons, et possédant des fonctions choisies parmi Me-OH, Si-OH, Me-O-Me, Me-O-Si, Si-O-Si, Me-OR¹ et Si-OR¹, les particules P1 ayant un diamètre moyen de moins de 1000 nm, la taille des particules étant déterminée par microscopie électronique à transmission,
(b) avec des organosilanes B de la formule générale II,
(R¹O) (R²₂Si- (CR³₂)ₙ-A-D-C (II)
ou selon le cas leurs produits d'hydrolyse et / ou de condensation,
(c) le cas échéant avec de l'eau, avec
R¹ représentant de l'hydrogène ou un radical hydrocarboné comportant de 1 à 6 atomes de carbone, et dont la chaîne carbonée peut être interrompue par des groupes oxygène, soufre ou NR⁴ non voisins,
R² représentant -(CR³₂)ₙ-A-D-C ou un radical hydrocarboné comportant de 1 à 12 atomes de carbone, et dont la chaîne carbonée peut être interrompue par des groupes oxygène, soufre ou NR⁴ non voisins,
R³ représentant de l'hydrogène ou un radical hydrocarboné comportant de 1 à 12 atomes de carbone, et dont la chaîne carbonée peut être interrompue par des groupes oxygène, soufre ou NR⁴ non voisins,
R⁴ représentant de l'hydrogène ou un radical hydrocarboné comportant de 1 à 12 atomes de carbone,
-A-D-C- représentant les groupes OC(O)C(CH₃)=CR³₂, OC (O) CH=CR³₂, NHC (O) C (CH₃) =CR³₂ ou NHC(O)CH=CR³₂,
n a des valeurs supérieures ou égales à 1 et
Me est un atome métallique.

2. Compositions Z suivant la revendication 1, dans lesquelles les particules P1 sont choisies parmi de l'acide silicique pyrogène, de l'acide silicique colloïdal et des résines siliconées.

3. Compositions Z suivant les revendications 1 et 2, dans lesquelles le radical hydrocarboné R¹ est un radical méthyle, éthyle ou phényle.

4. Compositions Z suivant les revendications 1 à 3, dans lesquelles les groupes éthyléniquement insaturés dans le liant BM sont capables de polymérisation radicalaire, cationique ou anionique.

5. Compositions Z suivant les revendications 1 à 3, dans lesquelles les groupes éthyléniquement insaturés dans le liant BM peuvent être polymérisés par un rayonnement actinique ou par un traitement thermique.

6. Compositions Z suivant les revendications 1 à 5, dans lesquelles les groupes éthyléniquement insaturés dans le liant BM sont choisis parmi des groupes vinyle, des groupes méthacrylate, des groupes acrylate et des groupes acrylamide.

7. Utilisation des compositions Z suivant les revendications 1 à 6 pour le revêtement de substrats.
